# EUROPEAN PATENT SPECIFICATION

(11) **EP 0 313 976 B1**
(45) Date of publication and mention of the grant of the patent: **10.04.1996**
(21) Application number: 88117374.4
(22) Date of filing: 19.10.1988
(51) Int. Cl.: G09B 5/06, G09B 7/00

(54) **Electronic educational video system apparatus**
Gerät für ein elektronisches Video-Ausbildungssystem
Appareil pour un système vidéo électronique d'éducation

(30) Priority: 28.10.1987 GB 8725204
(43) Date of publication of application: 03.05.1989
(73) Proprietor: VIDEO TECHNOLOGY ELECTRONICS, LTD., Tai Po New Territories (HK)
(72) Inventor: Chew, Wai-Kwok, Tai-Po New Territories (HK); Law, Garry Chiu-Hing, Lai Chi Kok Kowloon (HK); Fong, Chi-Ming, City One Shatin New Territories (HK)
(74) Representative: Beyer, Rudi

(56) References cited:
- EP-A- 0 044 642
- EP-A- 0 145 598
- GB-A- 2 116 770
- GB-A- 2 121 587
- GB-A- 2 175 728
- GB-A- 2 198 871
- US-A- 4 156 928

## Description

### BACKGROUND OF THE INVENTION

The present invention relates generally to electronic educational devices and, in particular, to an electronic educational video system apparatus for use with a standard television receiver wherein animated graphic displays are utilized to promote the development of a child's learning skills.

In recent years the availability of inexpensive microprocessor technology and integrated circuits have made possible the creation of electronic interactive learning aids designed specifically for young children. Typically questions are posed to the child who must provide a proposed answer which is subsequently compared with the correct answer stored within the learning aid. The typical prior art learning aid thereafter provides the child with an indication of whether the proposed answer is correct.

Early prior art electronic learning aids incorporated small LED or LCD displays to communicate questions to the child and often utilized the same small display to indicate to the child if the child's proposed answer is correct. Such a prior art device is disclosed by U.S. Patent No. 4,447,213. Other prior art devices relied upon lights or produced different audible tones to signify correct and incorrect responses. Prior art devices which sought to teach a child spelling often utilized external materials in the form of a printed workbook containing pictures of common objects whereby the child was prompted to look at the workbook and spell the object pictured therein. More advanced prior art devices incorporated voice synthesizer technology to communicate to the child in a synthesized human voice, though some still utilized small alpha-numeric displays. Such a prior art device is disclosed by U.S. Patent No. 4,516,260.

While some prior art devices have incorporated larger LCD displays, these and other prior art learning aids often lacked the ability to retain a child's attention for extended periods of time. Moreover, prior art educational devices typically lacked an effective means to communicate correct and incorrect answers to the child in a manner which reinforces the learning process in a graphic manner without repeating the same indication of correctness every time. Accordingly, prior art devices often fall into disuse due to their inability to maintain a child's curiousity and attention.

Another example of a prior art device is disclosed in European Patent Application 0 044 642, titled _{"}Health Education System". The device of the '642 application is a system for teaching the proper administration of cardio-pulmonary resuscitation (CPR). This system consists of two separate and distinct displays, a keyboard, a video disk player, a light-pen, and a peripheral device containing a sensor as a means of input, namely, a _{"}practice dummy". It also includes a program which provides audio and visual instruction to the user, In the form of spoken words and _{"}printed" text with no pictorial indicia, which is displayed on one of two screens. A second display is incorporated to aid in correction of mistaken performance by displaying the correct procedure in more detail by producing pre-recorded _{"}live action" video images which are not accompanied by any _{"}text".

The device of the '642 application, relies upon the use of pre-recorded media for its video and audio outputs, namely a pre-recorded video/audio disk separate from the computer-generated text This use of _{"}canned" visual images requires the use of two separate displays since the pictorial images are merely recorded on the disk and not digitally created and so do not lend themselves to being combined in the same display with the textual visual output.

Accordingly, it is an object of the present invention to provide an electronic educational display system apparatus which is connectable to a standard television receiver for presenting large graphic displays to the child, and to provide such an electronic educational education video apparatus which presents a child with a pictorial representation and an associated request to input a proposed correct response wherein the pictorial representation is animated to provide an indication to the child of the correctness of the child's proposed correct response.

### SUMMARY OF THE INVENTION

The present invention comprises an electronic video system apparatus for connection to a standard television receiver for teaching basic skills to a child through the use of graphic displays as claimed in claim 1. The present invention specifically serves to motivate the child to utilize the apparatus and enhance the child's learning.

The electronic educational video system apparatus itself includes memory means for storing digital data corresponding to a plurality of pictorial representations, digital data corresponding to requests associated with said pictorial representation which direct the child to provide a proposed correct response. The memory means further stores digital data corresponding to the actual correct response to the requests associated with said pictorial representations. Display generation means are provided which are electrically connected to the memory means for generating digital video signals representative of the plurality of pictorial representations. Interface means electrically connected to the display generation means provide a video signal to the television receiver for displaying the pictorial representations and their associated requests for proposed correct responses.

The electronic educational video system apparatus further includes processor means which are electrically connected to the memory means and the display generation means wherein the processor means serves to select one of the pictorial representations which is stored in the memory means and causes that selected pictorial representation to be displayed upon the television receiver. The processor means also causes the particular request associated with the pictorial representation directing the child to provide a proposed direct response to be similarly displayed upon the television receiver.

A plurality of interchangeable input means are provided for permitting the child to provide a proposed correct response to the request presented on the television receiver. Means for comparing the child's proposed correct response with the actual correct response stored in the memory means are provided together with means for providing to the child an indication of the correctness of the childs proposed correct response.

The electronic educational video system apparatus further includes means for animating the displayed pictorial representation associated with the particular request for the proposed correct response which is presented to the child. The animation of the displayed pictorial representation serves to further provide the child with an indication of the correctness of said child's proposed correct response wherein a unique pictorial representation is animated for each different request presented to the child. The invention further includes sound generation means electrically connected to the processor means and the interface means for providing audio output signals to the child as a further indication of the correctness of the child's proposed response. These audio output signals generated by the sound generation means are heard by the child through the television receiver's audio speaker.

In one embodiment of the invention, the electronic educational video system apparatus further includes voice synthesis means which are operably and electrically connected to the processor means and the interface means for providing the requests for proposed correct reponses, which are associated with the pictorial representations, to the child in synthesized human speech. The voice synthesis means further serves to provide the child with an indication of the correctness of the child's proposed correct response in synthesized human speech.

In another embodiment of the invention, the electronic educational video system apparatus further includes means for presenting to the child clues which serve to aid the child in determining the correct response to the presented request.

These clues may be presented to the child by way of a graphic display appearing upon the television receiver or alternatively and/or additionally by way of the voice synthesis means whereby the child may hear said clue in synthesized human speech.

In the preferred embodiment of the invention, the memory means, display generation means, interface means, processor means, means for comparing and means for indicating the correctness of the proposed correct response are all contained within a first housing means. Additionally, the input means are preferably contained within a second housing means wherein the second housing means may be telescopically and removably received by the first housing means so as to permit the second housing means to be stored when not in use.

In the preferred embodiment of the invention, the input means for permitting the child to provide his or her proposed correct response comprises a plurality of interchangeable devices such as, for example, an alpha-numeric keyboard, a touch-sensitive input pad or a mouse cursor control device wherein these various input devices may be interchanged with one another towards permitting the child to present the proposed correct response to the apparatus in the most convenient and expeditious manner. The electronic educational video system apparatus of the present invention additionally preferably incorporates input means which communicate with the processor means by way of an infra-red light wave signal which permits the input means to be operated by child at a position remote from the processor means and/or the television receiver. Such an arrangement obviates the need for any hardwire connection between any of the various interchangeable input devices and the processor means.

In the preferred embodiment of the invention the memory means comprises read-only-memory integrated circuit devices. Moreover, one embodiment of the invention further includes read-only-memory integrated circuit devices contained within cartridges which are electrically and removably connected to the processor means for storing additional digital data to enable the apparatus to display additional pictorial representations having correct responses associated therewith.

The electronic educational video system apparatus of the present invention may incorporate five basic modes of operation. The apparatus will display an activity selection menu from which the user may select one of the five main modes of operation which are identified as "MATH PROBLEMS, "WORD GAMES", MUSICAL GAMES", "SUPER PAINTER" plus a "CARTRIDGE GAMES" mode for additionally available modes.

Consistent with the objects of the present invention, the apparatus incorporates use of a robot character which appears upon the television screen as a "teacher" serving to prompt or otherwise respond to the child's interaction with questions and/or requests provided to the child by the apparatus.

In the preferred embodiment of the invention, the electronic educational video system apparatus will, throughout the course of executing the various modes of operation, communicate with the child by way of written and/or graphic messages appearing upon the television screen, through musical or other tonal sounds, and through a synthesized human voice directed toward the user. In view of the ability to communicate with the user through written messages appearing on a television screen, the apparatus remains functional, and of beneficial use to the child, if sound and/or voice are disabled, for example in situations where such sound would disturb others, such as the child's parents.

### MODE 1 - MATH PROBLEMS

The first possible mode of operation of the present invention is referred to as "MATH PROBLEMS" and incorporates five activities having a progressive theme utilized to foster the teaching of math skills through the use of the robot teacher character -- all in a game-like setting. The primary goal presented to the child is to advance the robot character from one activity through to the next activity. Advancing from one theme to the next is accomplished by correctly answering mathematical problems which are visually presented to the child on the television display. The mathematical problem presented to the child may be either addition, subtraction, multiplication or division type problems, or combinations thereof. The first menu presented to the child permits the child to chose among teaching, practice or competition modes of operation. In the teaching mode, mathematical problems are graphically presented to the child on the television receiver screen and the child is "led" through the method of solving such problems by the robot teacher character which appears on the television screen in combination with the problem displayed.

The practice mode of operation leads the child through the five theme activities. Each of the five theme activities incorporates the robot teacher which progresses from one theme activity to the next. In attempting to see the robot through its "journey" through each of the five activities, the child must correctly solve various mathematical problems. Accordingly, in its attempt to "play the game" and see the robot through each of the activities, the child learns and develops mathematical skills.

The competition mode is a two player mode which allows children to "race" against each other. Two robot characters, each of a different color, must navigate a "race course" where each player advances its respective robot character by correctly responding to mathematical problems. In operation, a mathematical problem is presented upon the television display screen and the player who first responds with a correct answer advances his respective robot character one step forward around the "race course".

In each of the foregoing teaching modes, practice mode and competition mode, the child may chose one of six levels of difficulty wherein each level of difficulty presents the child with increasingly difficult mathematical problems. Moreover, the child may chose to concentrate on one specific type of mathematical problem, for example, addition, by selecting from an appropriate menu displayed upon the television screen.

### MODE 2 - WORD PROBLEMS

The second possible mode of operation of the present invention referred to as "WORD PROBLEMS" is divided 15 into five activities wherein the child must respond to word related problems. The television screen displays a menu of five possible activities designated as "SPELLING 1", "SPELLING 2", "WHAT IS IT?", "WHICH IS THE ANSWER?", and "ANSWERING QUESTIONS", from which the child user is 20 prompted to select one of said activities.

Selection of the first word problem activity, "SPELLING 1" causes the apparatus to generate a common object on the television screen and asks the child to input the missing letter which, when supplied by the child, completes the correct spelling of the pictured object.

Specifically, the apparatus will cause an object to appear upon the display screen accompanied by the spelling of that object wherein one of the letters is missing. The apparatus requests the child user to "fill in the missing letter" if a correct answer is provided by the child operator within three attempts, the child will hear a series of pleasant sounding notes and will see and hear the words "yes, you are right". In addition, a scoring display appearing upon the television receiver screen will be incrementally advanced for each correct answer. If the child user provides an incorrect response on the first or second attempt, a series of unpleasant notes will be played and the child will see and hear the message "no, try again". If, after three attempts, the child is unable to provide the correct response, the correct answer will appear in place of the question mark accompanied by the message "this is the correct answer". Moreover, each time the child provides a correct response, the robot teacher character will become animated, nodding and saying "yes". Each time an incorrect answer is supplied, the robot teacher character will become animated, shaking its head and saying "no". An additional feature of this activity, permits the child user to depress the "help" key which will cause clues, in the form of three letters, to appear on the display, one of which letters is the correct response. The user may then select one of the possible choices as his response. Periodically through the course of engaging this activity, the child user will see the display indicating the score achieved and will be provided with an evaluation of the performance through such comments as "you need more practice", "good going", or "excellent", subject to the score obtained.

In the two-player mode of operation, two children may compete against one another in playing the "SPELLING 1" activity. The apparatus will continually display a score for player one and another score for player two accompanied by a timer display. The apparatus will prompt the first player to commence play and will cause the timer to count down. If the first player is unable to answer within the time allowed or enters an incorrect answer, an unpleasant series of notes will sound, the robot teacher character will turn its head and say "no" and the display "time is up for player one, player two's turn" or "no, player two's turn" will appear signaling player two to commence play. If neither player can provide the correct answer, the robot teacher will provide the correct answer by saying "this is the correct answer" accompanied by the correct answer appearing on the television receiver screen. Periodically throughout the course of play, player one's score will be displayed accompanied by an evaluation of his or her performance similar to that in the one-player mode, followed by the display and evaluation of player two's score.

The "SPELLING 2" activity operates identically to the spelling one activity except that more difficult words are supplied to the child operator.

The third possible activity within the word problems mode is designated "HOW DO YOU SPELL IT?". In this mode of operation the child user is presented with a display containing common objects. The child will be prompted to provide the correct spelling of the common object pictured. For example, the child may be provided with a display of a farm scene in which various farm animals appear. Upon completion of the display, the child will prompted to provide the proper spelling of a pictured object by the apparatus having displayed a question mark overlapping one of the particular farm animals followed by the textual display of the words "how do you spell it?" and audio generation/presentation of that same message. Accompanying this request is the presentation of a plurality of blanks corresponding in number to the number of letters contained in the correct spelling of the particular selected object. The child is thus prompted to input upon the keyboard the correct spelling of the object pictured, for example, a horse. In such a case, five blank lines would appear upon the display accompanied by a question mark overlapping the pictured horse on the television receiver screen. If the student supplies the letters h, o, r, s, e in the correct order, the message "yes, you are right" will be displayed as well as heard by the user and the horse will become animated reinforcing that the child has supplied the correct answer. If an incorrect answer is supplied by the child, a series of unpleasant notes will be heard and the message "no, try again" will be both seen and heard by the child. If after three attempts, the child is unable to supply the correct answer, the message "this is the correct answer" will be both seen and heard followed by the correct letters appearing in the blanks supplied. As an additional feature, the child may press the "help" which will cause the first and last letter of the object's spelling to be displayed upon the television receiver screen. Thereafter, only a single attempt to provide the correct answer is allowed. For each correct answer, a score is incrementally advanced upon the display. After having attempted to respond to a predetermined number of objects, the child will both hear and see the message "your score is " accompanied by an evaluation such as "good going" or "excellent" subject to the score obtained. As part of this mode of operation, a correct answer will cause the object to be spelled to become animated to thereby cause the child to desire to "play the game" and thus learn.

In the two-player mode of activity three, "HOW DO YOU SPELL IT?" the television receiver screen includes displays of player one's score player two's score, and a timer and operates similarly to the two-player mode of activities one and two wherein the first player must provide a correct answer within an displayed time and if that player is unable to correctly answer within said time, player two is given the opportunity to respond and accordingly advance his score.

Upon selection of activity four, designated "WHICH IS THE ANSWER?", the apparatus will cause the television receiver to display a plurality of objects accompanied by a logical sentence with a word missing. The child is prompted to supply the word which logically completes the sentence displayed. For example, the child may be presented with a display which includes a figure of a boy, a window, a dog, and a ball. The child will then see a "fill-in-blank question" accompanied by three possible answers on the television screen. Specifically, "the boy his head". The child will both see and hear the message "what is the answer? One of the figures will then become animated thereby supplying the child with the prompt for the correct question.

In one example, the boy figure may begin turning his head indicating that the child should supply the response "turns". In another example, the ball may roll across the display screen indicating to the child that he or she should supply the answer "rolls". In still another example, the boy figure may be pictured standing adjacent to a window wherein the child will see the message "the boy stands a window" accompanied by three choices, near, above, below. In such an example, the child would properly respond by typing the word "near".

As in the preceding activities, the child will both hear and see the message "yes, you are right" for correct answers and "no, try again" for wrong answers. Additionally, after three wrong answers, the child will hear and see "this is the correct answer" accompanied by the correct answer appearing in the blank. Similarly, after responding to twenty questions, the apparatus will provide the user with an indication of the score obtained to that point and an evaluation of the user's performance by displaying and saying such messages as "good going" or "you need more practice", subject to the score obtained. Moreover, a combination of pleasant and unpleasant sounding music will accompany correct and incorrect responses, respectively.

The fifth activity is designated "ANSWERING QUESTIONS" wherein the user is prompted to answer questions which are related to the theme of a particular display. For example, the child may be presented with a picture of a group of objects which are each associated with a particular season. For example, one display may contain a snowman and the child will be asked to identify the corresponding season of the year. The child is thus expected to supply the answer "winter". The object of this activity is to teach the child to identify, for example, seasons, with the appearance of different objects, and in general to develop logic and associational skills.

### MODE 3 - Word games

The third mode of operation of the electronic educational video system apparatus is designated "WORD GAMES" and includes three different activities, namely, "WORD ZAPPER", "SCRAMBLE", and "WORD SEARCH", wherein each of the activities may be played in either a one- or two-player mode. The selection of a particular activity and player mode are accomplished through menus which visually and audially prompt the child to make the appropriate selection.

The first activity, designated "WORD ZAPPER" and corresponds to the game commonly known as "hangman". In this activity, the child is presented with a display in which appear the robot teacher character together with a number of blanks corresponding to the number of letters in the word to be guessed. The child sees and hears the message "guess the letter" thereby prompting the child to input a letter. If the child inputs a letter which appears in the "mystery word" the letter will be placed in place of one of the blanks and the child will see and hear the message "yes, you are right". However, if the letter guessed is not contained within the "mystery word" the child will hear a series of unpleasant notes. In addition, other objects on the display will become animated to indicate right or wrong responses. Moreover, if an incorrect answer is given by the child, one of the body parts of the robot teacher character will lose its color with only the outline of, for example, an arm remaining. If the child is able to guess all of the letters of the word before only an outline of the robot character remains, the child will have won and pleasant music and animation will appear. If however, only the outline of the robot character appears and the child is unable to supply the correct letters, the child will hear unpleasant music and the word "no" accompanied by animation, such as smoke appearing from a spaceship pictorial in the display.

The second activity in the WORD GAME mode of operation is designated "SCRAMBLE" wherein the child must unscramble a series of letters to form the proper word. In this particular activity the display on a television receiver screen comprises a spaceship-like control panel and a window looking into space. In operation, a "spaceship" will move in animation across the "sky" depositing the letter in a randomly arranged order. A corresponding number of dashes will thereafter appear upon a "display panel" in the "control panel". The student will then be prompted to unscramble the word appearing in the "sky" by hearing and seeing the message "rearrange the letters". A timer indicator will visually change signifying the time in which the user must unscramble the letters. If the child correctly unscrambles the word, he will here and see the message, "yes, you are right" and various gauges and dials appearing on the display will become animated.

If the student is unable to supply the correct answer within the time limit, he or she will hear a series of unpleasant notes and will see and hear the display message "no, try again" and his or her incorrectly supplied answer will be erased. If the user child is unable again to properly unscramble the letters, the "spaceship" will, in animation, move across the screen overlapping the scrambled letters and descramble the letters and the student will see and hear the message "this is the correct answer". Periodically throughout the course of play, the student will hear and see a message indicating the score obtained to that point and providing a evaluation of that score through such messages and "good going" or "excellent", subject to the score obtained.

Activity three of the WORD GAMES mode of operation is designated "WORD SEARCH". In this mode of operation, the child is prompted to locate the correct spelling of a word from, within, a group of letters arranged in matrix form. Moreover, the word to be spelled is identified by the graphic representation of that object upon the television display. For example, the child may see upon the television receiver screen a display of a matrix of letters accompanied by the robot teaching character. The object to be spelled and found from within the matrix will be displayed upon the screen. For example, the user may see the picture of an apple accompanied by the message "search the word". The student child would thereafter have to locate the letters a, p, p, l, e within the matrix of letters by use of a cursor control on the keyboard so as to identify the spelling of the word apple. Correct and incorrect responses are responded to by way of animation of the robot character, the playing of pleasant or unpleasant music and the hearing and seeing of messages "yes, you are right" or "no, try again", respectively. If the child is unable to locate the letters corresponding to the pictured object, within the period of time or number of attempts allowed, the apparatus will cause the student to hear and see the message "this is the correct answer" and the correct letters will be highlighted within the letter matrix.

For each of the activities within the WORD GAME mode of operation, the child may select between a one- and two-player mode which corresponds to similar modes within the WORD PROBLEM option.

### MODE FOUR - MUSICAL GAMES

The fourth mode of operation of the electronic educational video system apparatus is designated "MUSICAL GAMES" and consists of four separate activities identified as "MEMORY TONE," "DEMO-SONG," "LEARN A SONG" and "FOLLOW ME". As in the other modes of operation, the child selects from a menu displayed upon the television receiver screen the activity he or she wishes to use. In the first activity, "MEMORY TONE", the apparatus causes an animated keyboard to appear upon the television receiver screen accompanied by the robot teaching character. The child may then press notes, e.g. "do" "re" .... etc., and the apparatus will generate a musical sound corresponding to the key(s) depressed by the child. At the same time, the robot teacher character will move in animation, jumping from a starting position to the keys depressed by the student in order, thereby identifying which key corresponds to which "note" selected and heard by the child. In addition, the child will see the note displayed upon the television screen. After having selected the desired musical notes, the user may depress a "play" key and the apparatus will, in sequence, replay the notes corresponding to the keys depressed by child.

In the second activity designated "DEMO SONG", the child may select one of ten predetermined songs which appear upon the television screen. After selecting a song, the child will see an animated display of animated figures each of which corresponds to a plurality of notes. As the apparatus plays the selected song, the various figures appearing upon the display will become animated, jumping and opening their mouths as if "sounding" the note.

The third activity in this mode of operation is designated "LEARN-A-SONG". This activity incorporates a display similar to the "DEMO-SONG" activity, however, the child will see the animation of a particular character and will hear the notes sounded by that character and is thus prompted to identify that note by depressing the correct corresponding key of the keyboard on the input device.

The fourth activity in the musical games mode of operation is designated "FOLLOW ME". In this activity, the user is presented with an animated display of a "spaceship" having windows in which are displayed the various musical notes. The various notes will be prompted by highlighting or changing the color of the particular window corresponding to that note thereby prompting the student to depress the key corresponding thereto on the keyboard. Simultaneously, the note corresponding to that in the "window" will be generated through the television receiver. If the child correctly depresses the note on the keyboard corresponding to the note identified on the display and heard through the television receiver, the apparatus will thereafter repeat that same note plus an additional note thereby prompting the student user child to identify both notes. The apparatus will continue to add additional notes to those already played and identified by the user so long the child correctly inputs each of the notes in sequence. If the child improperly identifies a note displayed and sounded, he will hear and see the message "no, try again" until properly identifying on the keyboard the note heard and seen.

### MODE FIVE - SUPER PAINTER

The fifth mode of operation of the electronic educational video system apparatus designated PAINTER" comprises what may be described as an electronic coloring book. In operation, the child is presented with a display appearing upon the television receiver screen which comprises a series of commands, a color menu with 14 selectable colors, an object library, and a drawing area. The commands comprise pictorial icons corresponding to various commands. For example, a pencil corresponds to the command to draw a fine line whereas a crayon icon corresponds to the command to draw a broader line. The color menu comprises a plurality of color squares which when selected will cause that color to be used in drawing and/or filling regions in the drawing region. The object library comprises a plurality of symbolic icons which correspond to predrawn objects contained within an "electronic" library which may be selected by the child, to cause a completed object such as a car, to appear in the drawing region merely by selecting that particular object. In operation, the child makes use of the cursor controls on the keyboard or alternately, the mouse cursor control input device or touch pad input device, to select the various commands, colors and objects towards drawing, either in free style or in predetermined geometric shapes, objects within the drawing region.

### MODE SIX - CARTRIDGES

The sixth mode of operation of the video system apparatus is designated "CARTRIDGES". Upon selection of this mode, the child will be presented with a menu which indicates additional activities, if any, which may be selected by the child, contained within removable cartridges insertable into the apparatus.
FIG. 1 of the drawings is a top plan view of the present electronic educational video system apparatus illustrating the base unit having disposed thereon the remote keyboard unit and asssociated cursor control units and further illustrating the insertion of a ROM cartridge;
FIG. 2 of the drawings is a schematic view of the present invention specifically illustrating the connection of the base unit to a standard television receiver, further illustrating the remote placement of the keyboard unit with its cursor controls detached;
FIG. 3 of the drawings is a block diagram of the electronic circuitry of the present electronic educational video system apparatus;
FIG. 4 of the drawings is a schematic diagram of the electronic circuitry contained within the electronic educational video system apparatus.
FIG. 5 of the drawings is a schematic diagram of the power control circuitry of the present apparatus;
FIG. 6 of the drawings is a schematic diagram of the noise filter circuitry utilized in the present invention;
FIG. 7 of the drawings is a schematic diagram of the audio and video mixing circuitry of the present invention;
FIG. 8 of the drawings is a schematic diagram of the radio frequency modulator circuitry as shown in FIG. 7;
FIG. 9 of the drawings is a schematic diagram of the electronic circuitry contained within the remote keyboard unit;
FIG. 10 of the drawings is a schematic diagram of the voice synthesizer generation circuitry.
FIG. 11 of the drawings is a block diagram of the intergrated circuit 57 shown in FIG. 4 of the drawings;
FIG. 12 of the drawings is a top plan view of the mouse input device for use in association with the present invention;
FIG. 13 of the drawings is a top plan view of the touch pad input device for use in association with the present invention, specifically showing the input wand placed in its cradle;
FIG. 14 is a side elevational view of the input wand used in association with the touch pad input device;
FIG. 15 of the drawings is a bottom plan view of the input wand; and
FIG. 16 of the drawings is a front elevation view of the input wand.

While this invention is susceptible of embodiment in many different forms, there is shown in drawings and will herein be described in detail, several specific embodiments, with the understanding that the present disclosure is to be considered as an exemplification of the principles of the invention and is not intended to limit the invention to the embodiments illustrated.

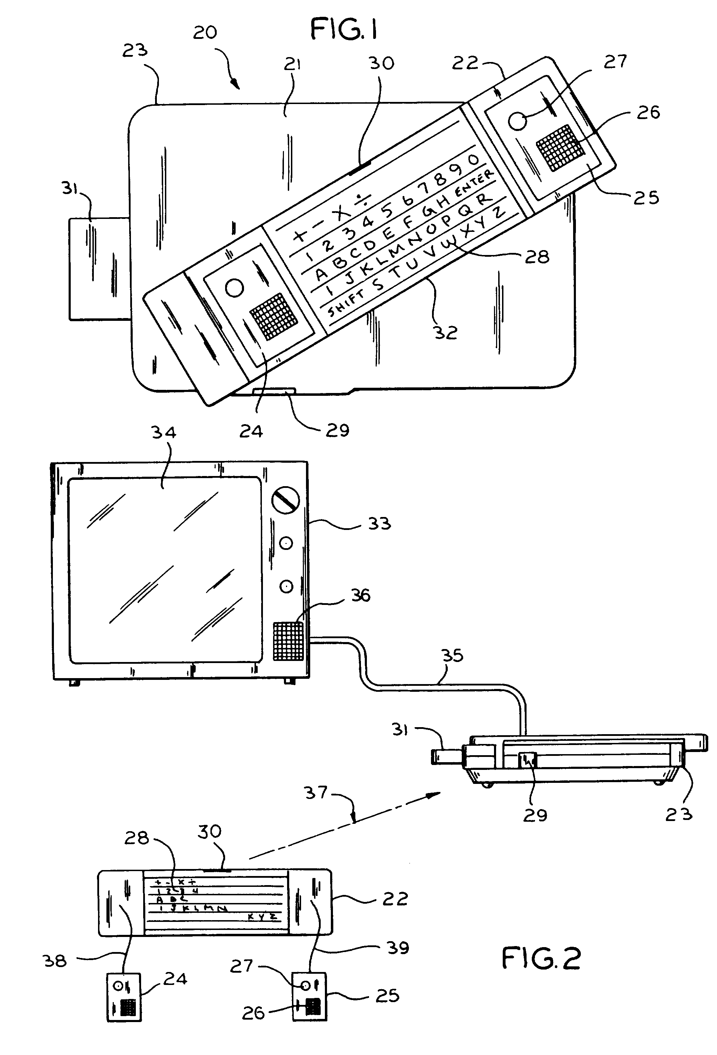

Electronic educational video system apparatus 20 is shown in FIG. 1 in its assembled position, with keyboard housing 22 operably disposed upon the top surface 21 of base unit 23. Keyboard housing 22 is shown comprising keyboard 32, left cursor control 24 and right cursor control 25, all contained within keyboard housing 22. Curser controls 24 and 25 are shown comprising cursor control key 26 and button 27. Base unit 23 is further shown including infra-red signal receiver port 29. Additionally ROM cartridge 31 is shown operably inserted into base unit 23.

FIG. 2 provides an illustration of the connection of the electronic educational game apparatus 20 to a standard television receiver 33. Base unit 23 is shown with keyboard housing 22 removed therefrom. Base unit 23 is operably connected to television receiver 33 by way of cable 35 which connects with the antenna input (not shown) of television receiver 33. Television receiver 33 is 25 specifically shown as comprising screen 34 and speaker 36.

In operation, keyboard housing 22 and keyboard 32 are not physically attached to base unit 23 but rather communicate with base unit 23 by way of an infra-red signal, designated 37. Accordingly, in operation, base unit 23 may be positioned adjacent to television receiver 33 such that keyboard housing 22 may be positioned remote therefrom. Keyboard 32 is shown as comprising a membrane keyboard bearing indicia 28 thereon. Indicia 28 include the letters of the alphabet, numbers 0 through 9 and mathematical operators. (FIG. 1) Moreover, left cursor control 24 and right cursor control 25 are shown removed from keyboard housing 22, so as to enable two players to utilize the keyboard cursor control units at a greater distance from one another. Left cursor control unit 24 is shown operably attached to keyboard housing 22, and the circuitry contained therein, (not shown) by wire 38 whereas right cursor control unit 25 is shown connected to keyboard housing 22 by wire 39. Moreover, keyboard housing 22 is shown as including infra-red output port 30 which, in operation of the device, is directed toward infra-red receiver port 29 upon base unit 23. Of course, keyboard unit 22 could be operably attached to base unit 23 by a hardwire connection.

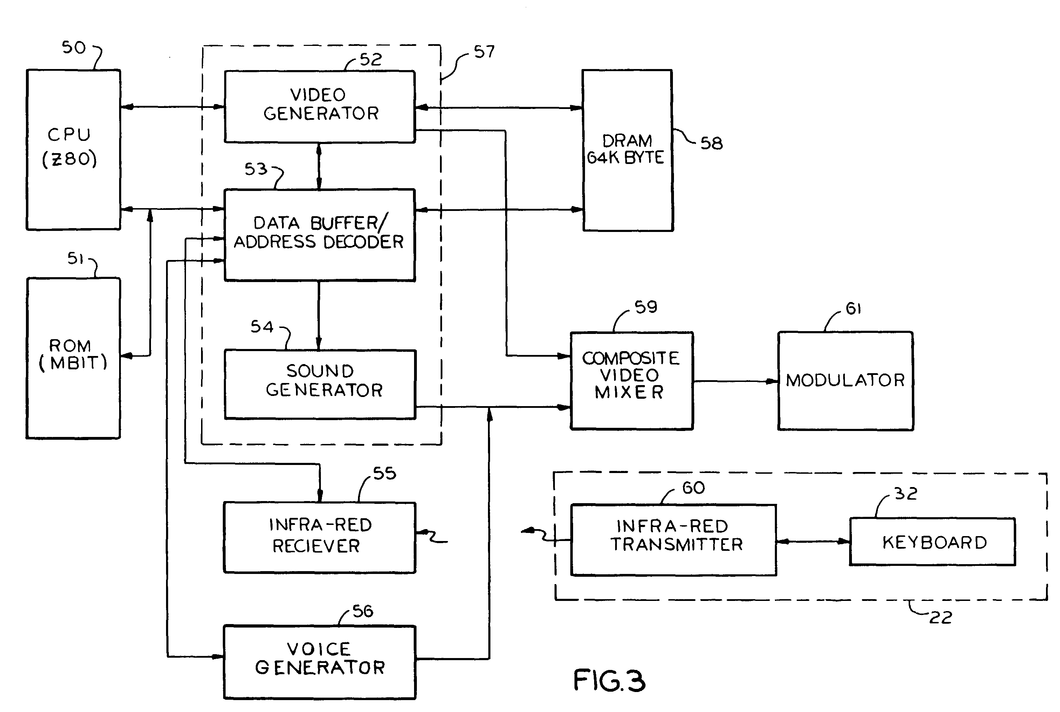

FIG. 3 of the drawings illustrates a block diagram of the electrical components of the present electronic educational video system apparatus. Central processing unit CPU 50 is shown connected to integrated circuit 57. In the preferred embodiment of the invention, CPU 50 comprises a Z80 microprocessor integrated circuit. Read-only-memory, ROM 51, is shown connected to CPU 50 and data buffers/address encoder 53. In the preferred embodiment of the invention ROM 51 comprises two megabytes of read-only-memory. Contained within ROM 51 are the computer software programs which generate the video displays, sound presentation, voice presentation, and other control signals necessary for generating video displays and audio sounds to the television receiver 33 and thus the user. Moreover, ROM 51 contains, in digital form, the various questions which are presented to the child, and the correct responses to those questions, as well as digital data necessary for animating the various displays presented upon the television screen 35.

Integrated circuit 57 is specifically shown as comprising video generator 52, data buffer/address decoder 53 and sound generator 54. Operably associated with, and connected to, integrated circuit 57, and thus CPU 50, is random-access-memory 58. Random-access-memory 58 preferably comprises 64 kilobytes of digital memory. Operably associated with data buffer/address decoder 53 is infra-red receiver 55. Infra-red receiver 55 serves to accept the infra-red signal from keyboard 32 thereby transmitting the child's input to the apparatus 20.

Voice generator 56 is shown operably connected to data buffer/address decoder 53 and to composite video mixer 59. Voice generator 56 produces synthesized human speech as directed by CPU 50 and the computer programs contained within ROM 51.

Composite video mixer 59 is shown operably connected to voice generator 56, sound generator 54 and video generator 52. Composite video mixer 59 serves to combine the voice, sound and video signals towards their transmittal and eventual representation upon television receiver 33. Specifically, composite video mixer 59 is operably attached to modulator 61 which converts said signals into a radio frequency format which is suitable for connection to the antenna input of television receiver 33.

Infra-red transmitter 60 and keyboard 32 are contained within keyboard housing 22. Infra-red transmitter 60 serves to transmit an infra-red signal to infra-red receiver 55 wherein said signals correspond to keys on keyboard 32 which are depressed as input responses by the child.

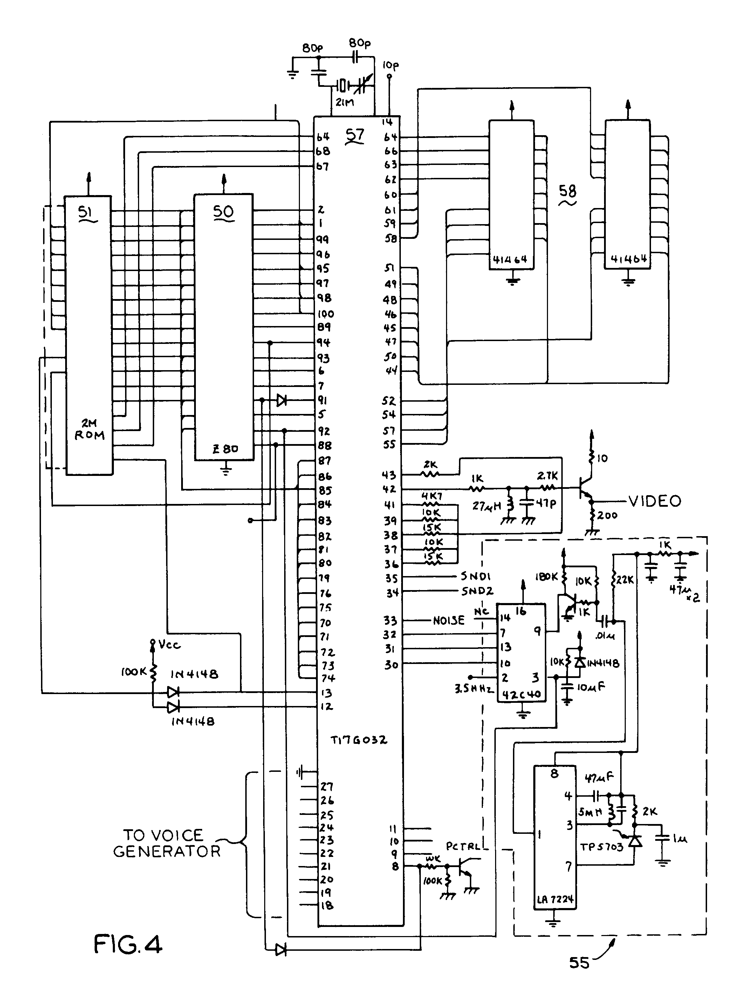

FIG. 4 of the drawings specifically illustrates the connection of ROM 51 to CPU 50. CPU 50 is, in turn, shown connected to integrated circuit 57. Random access memory 58 is shown operably connected to integrated circuit 57 and infra-red receiver 55 is additionally shown operably and electrically connected to integrated circuit 57.

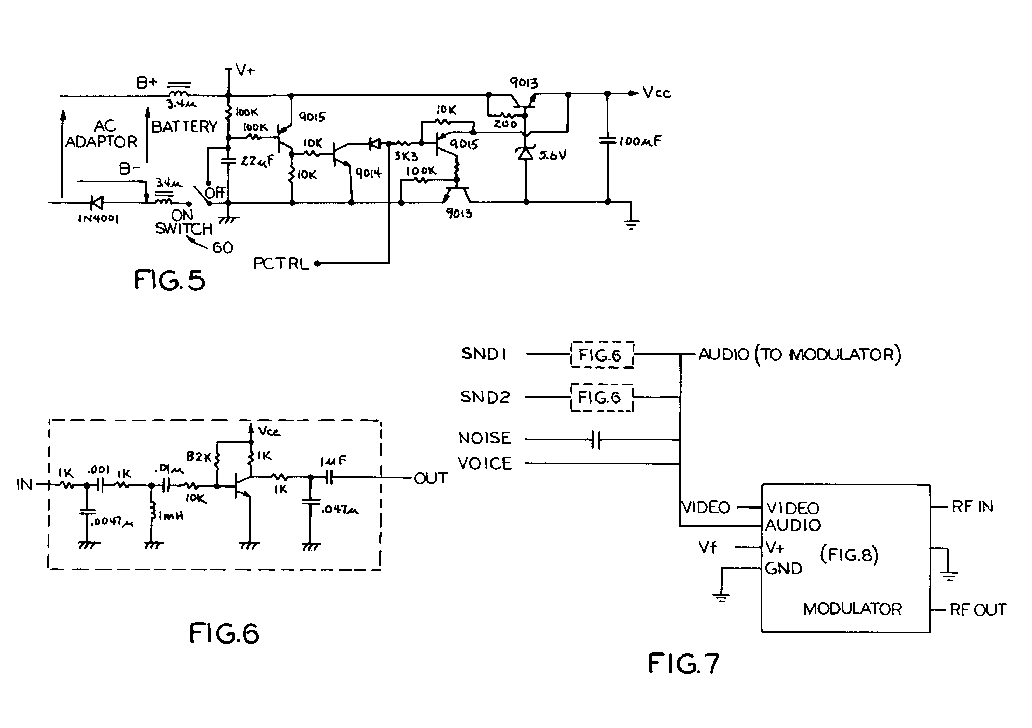

FIG. 5 of the drawings discloses and illustrates the power conditioning circuitry for the present electronic educational video system apparatus. All applicable electronic element values including, on/off switch 60 are listed and the circuit's operation should be readily understandable by those skilled in the art.

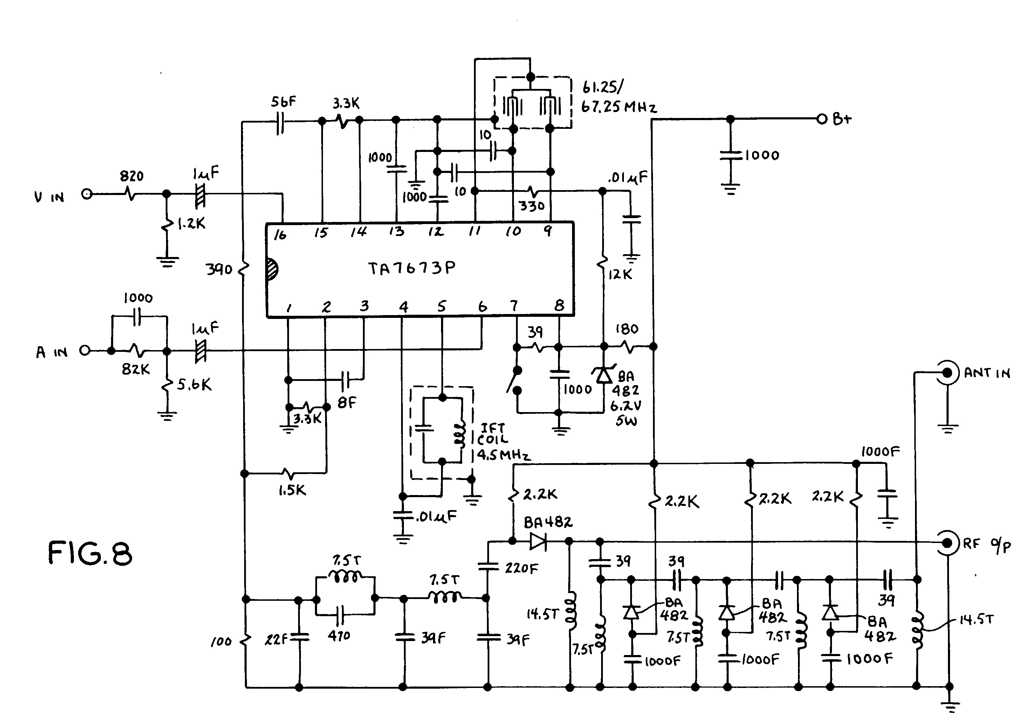

FIG. 7 of the drawings illustrates the circuitry arrangement for combining the audio signals and video signals generated on FIG. 4 and towards modulating said signals into a radio frequency output adaptable for attachment to the antenna input of said television receiver 33. Specifically, FIG. 6 of the drawings illustrates a recognizable noise filter circuit while FIG. 8 of the drawings illustrates the modulation circuitry. All component values are provided and should similarly be readily understandable by those skilled in the art.

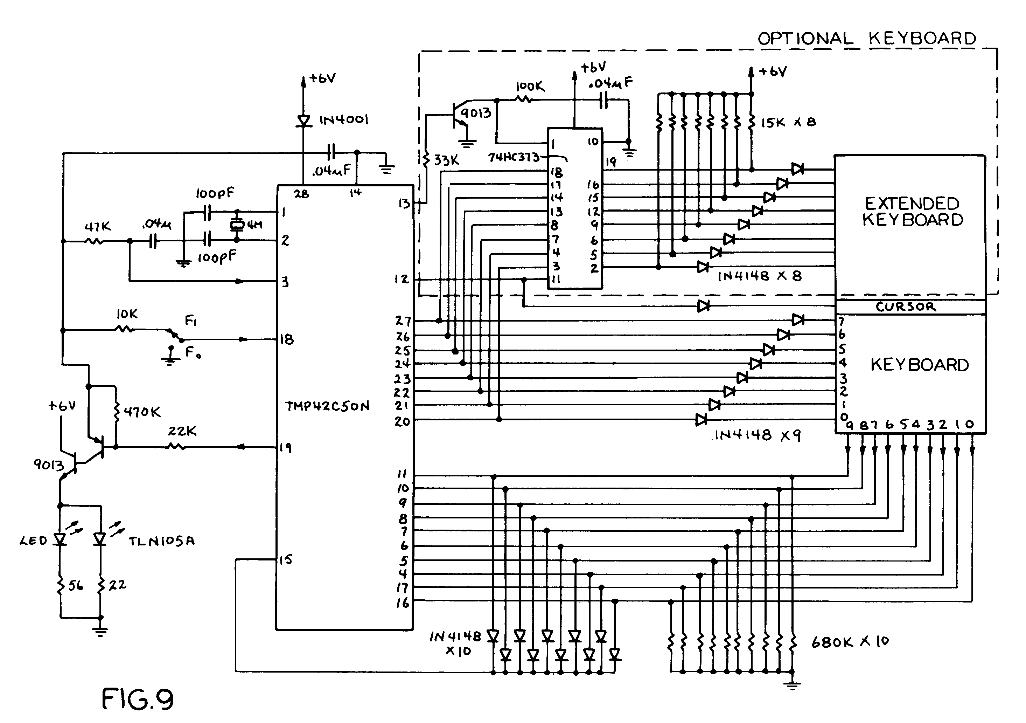

FIG. 9 of the drawings illustrates the keyboard and cursor control circuitry and infra-red transmission circuitry associated therewith.

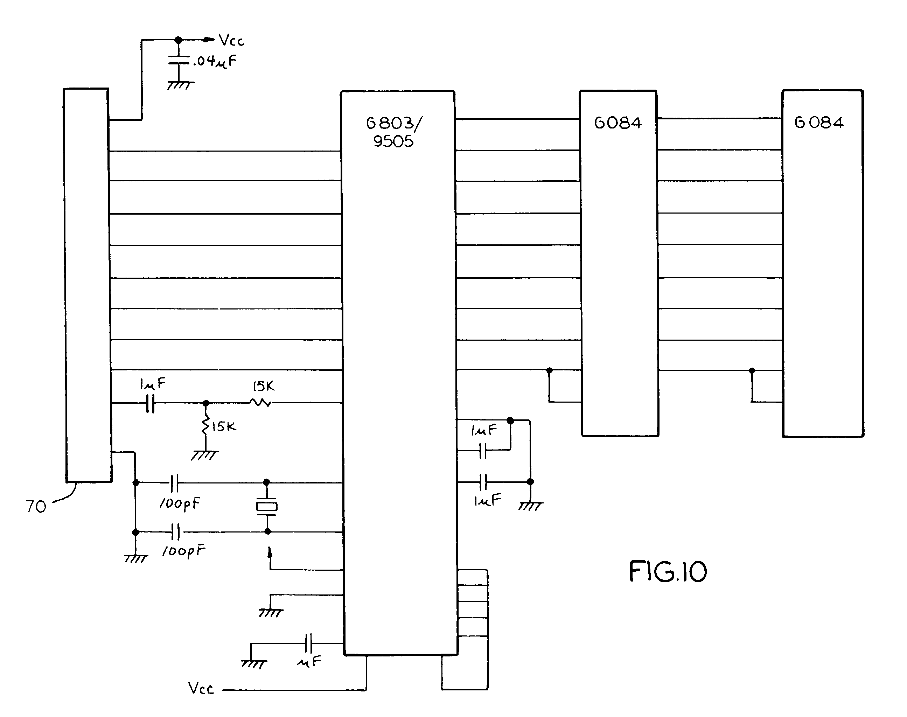

FIG. 10 of the drawings is a schematic diagram of the voice generation circuitry which is based upon a type 6803/9505 voice synthesis chip connected in a known manner. Block 70 connects the voice generation circuit to the main circuitry illustrated in Fig. 4.

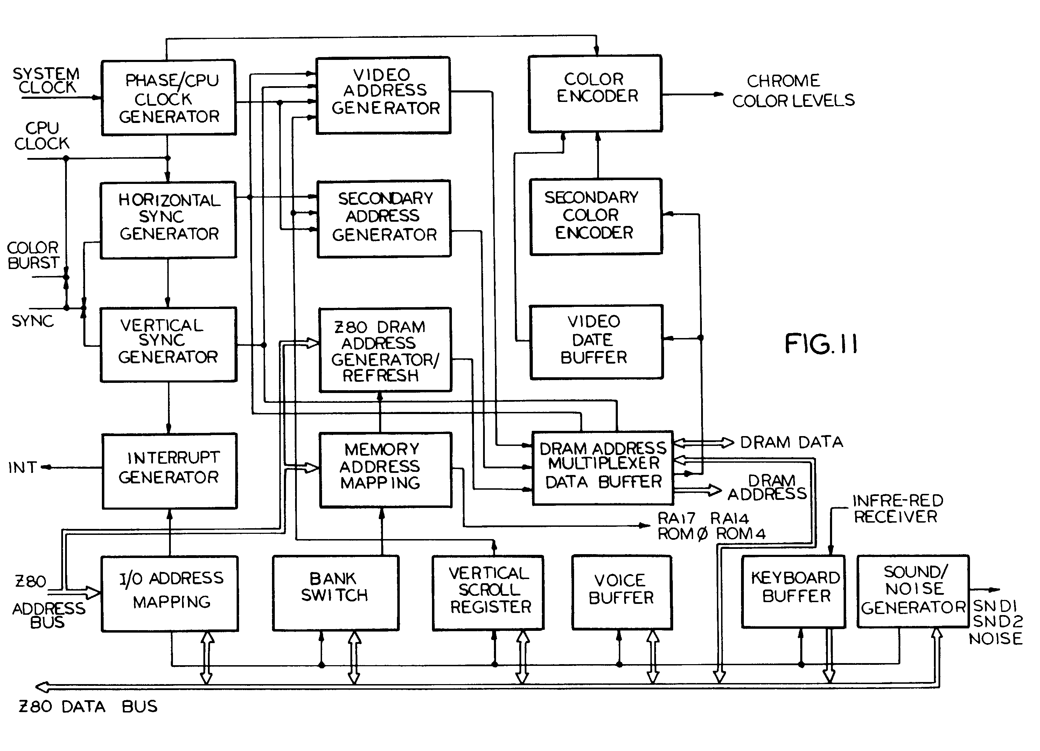

FIG. 11 of the drawings is block diagram of the video display generation, audio display generation and memory and CPU interface and controller circuitry and contained in integrated circuit on 57 shown on FIG. 4.

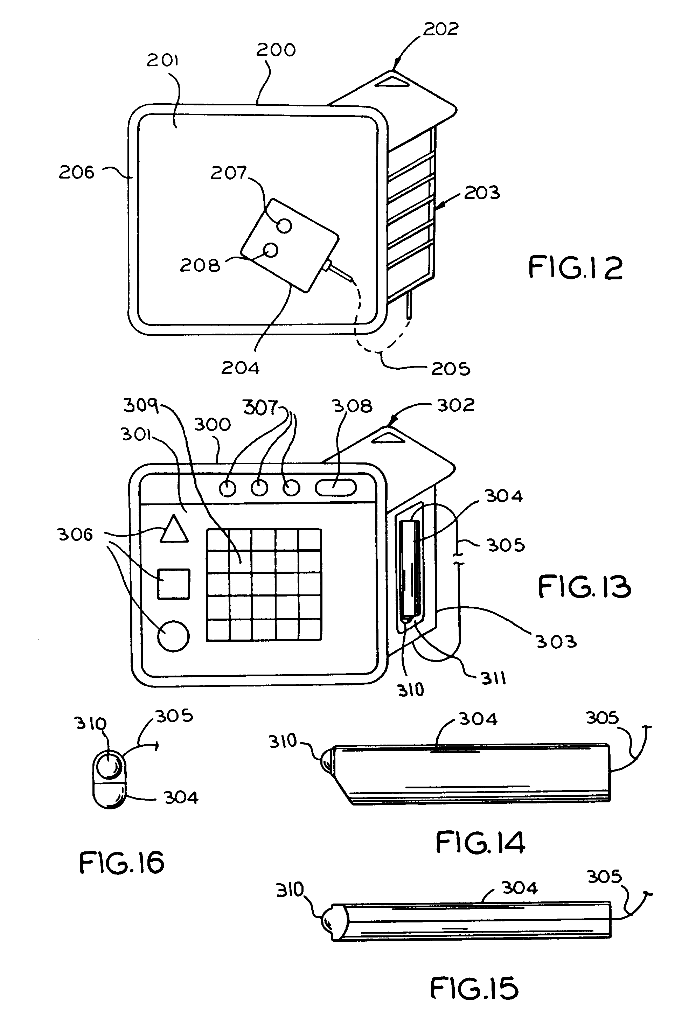

FIG. 12 shows remote input device 200 which comprises a mouse 204 and table 201 assembly. Specifically, remote input device 200 communicates with base unit 23 in a manner similar to keyboard 22 in that remote input device 200 relies upon and utilizes infra-red transmitter circuitry contained within housing 206. In operation, remote input device 200 is aligned so as to direct infra-red transmitter port 202 in the direction of base unit 23 and specifically infra-red receiver port 29. Mouse unit 204 is shown connected to housing 206 via wire 205. Mouse 205 further includes buttons 207 and 208. In operation, mouse and table combination 204 and 201 respectively may replace cursor control and button unit 24 and/or 25.

FIG. 13 illustrates remote input device 300 which is a touch sensitive input device utilizing touch sensitive surface 301 and wand 304. Touch sensitive surface 301 is shown comprising a writing surface 309 input areas 306 which are shown comprising geometrical shapes, specifically triangle, square and circle. Moreover, remote input device 300 includes upon its touch surface 301 input areas 307 and 308 which correspond to standard keyboard commands such as escape, answer, erase and enter. Remote input device 300 communicates with base unit 23 via an infra-red signal which is emitted through infra-red transmission port 302. In operation, touch pad 300 is aligned with base unit 23 so as to direct infra-red signals emitting from port 302 towards the base unit infra-red receiving port 29. FIG. 12 further illustrates wand 304 which is shown operably tied to cabinet 303 via cord 305. Wand 304 is moreover shown residing in recess 311. Wand 304 specifically includes a touch point 310. Wand 304 is a non-electrical device and merely facilitates the depression of the touch sensitive surface 301 in place of the user's finger.

FIG. 14 of the drawings is a side elevational view of wand 304 specifically showing cord 305 and touch point 310. FIG. 15 is a bottom plan view of same while FIG. 16 is a front elevational view specifically showing touch point 310.

The foregoing description and drawings merely explain and illustrate the invention and the invention is not limited thereto, except insofar as the appended claims are so limited.

## Claims

1. An electronic educational video system apparatus (20) for connection to a standard television receiver [30] for teaching basic skills to a child through the use of animated pictorial displays which serve to motivate said child to utilize said apparatus and enhance said child's learning, said electronic educational video system apparatus characterized by:
- memory means [51] for storing digital data corresponding to a plurality of pictorial representations, digital data corresponding to requests associated with said pictorial representation directing said child to provide a proposed correct response, said requests being both aural and textual, and digital data corresponding to the correct response to said requests associated with said pictorial representations;
- display generation means [52] [59] electrically connected to said memory means for combining said data into said plurality of combinations and digitally generating video signals representative of said plurality of pictorial representations toward the generation of a single display incorporating said pictorial representations and said textual representations;
- interface means [61] electrically connected to said display generation means for providing said video signal to said television receiver towards displaying said pictorial representations and said associated requests thereon;
- processor means [50] electrically connected to said memory means and said display generation means;
- said processor means being for selecting one of said pictorial representations stored in said memory means [51] and causing said selected pictorial representation to be displayed upon said television receiver [33] and for causing said associated request to be presented to said child;
- a plurality of interchangeable input means [32] [200] [300] for permitting said child to provide a proposed correct response to said request;
- means [50], [51], [53], [58] for comparing said child's proposed correct response with said correct response stored in said memory means; and
- means for animating said displayed pictorial representation associated with said request for proposed correct responses presented to said child so as to provide said child with an indication of the correctness of said child's proposed response.

2. The invention according to Claim 1 in which said memory means [300] comprises read-only-memory integrated circuit devices.

3. The invention according to Claim 1 in which said input means [32] comprises an alphanumeric keyboard.

4. The invention according to Claim 1 in which said input means [300] comprises a touch-sensitive input pad.

5. The invention according to Claim 1 in which said input means [200] comprises a mouse cursor control device.

6. The electronic educational video system apparatus [20] according to Claim 1 in which said memory means [51], said display generation means [52], [59], said interface means [61], said proces means [50], means for comparing and means for indicating the correctness of said proposed correct response are contained within a first housing means [23] and wherein said input means [32],[300], [200] is contained within a second housing means [22], [201], [301].

7. The invention according to Claim 6 in which said second housing means [22] is telescopically and removably received by said first housing means [23] for permitting storage of said second housing means.

8. The invention characterized in claim 1 in which said input means [32], [300], [200] communicates with said processor means [50] by infra-red light wave signals [37] thereby permitting said input means are remote from and in wireless communication with said processor [50] means.

9. The electronic educational video system apparatus [20] of Claim 1 further including by read-only-memory cartridges [31] electrically and removably connected to said processor means [50] enabling said apparatus [20] to display additional pictorial representations having correct responses associated therewith.

10. The electronic educational video system apparatus [20] of Claim 1 further including sound generation means [54] electrically connected to said processor means [50] and said interface means [61] for providing audio output signals to said child as an indication of the correctness of said child's proposed response.

11. The electronic educational video system apparatus [20] of Claim 1 further including voice synthesis means [56] operably and electrically connected to said processor means [50] and said interface means [61] for providing said requests for proposed correct responses associated with said pictorial representations to said child in synthesized human speech and for providing said indication of the correctness of said child's proposed correct response in synthesized human speech.

12. The electronic educational video system apparatus [20] of Claim 1 further including means for presenting to said child clues to aid the child in determining the correct response to said presented request.

13. An electronic educational video system apparatus (20) according to claim 1, for teaching spelling skills to a child, characterized in that:
the digital data stored in the memory means includes digital data which may be combined in a plurality of combinations corresponding to a plurality of unique pictorial representations of common objects, and digital data corresponding to requests associated with each one of said unique pictorial representations directing said child to provide the correct spelling of said unique pictorial representations, the requests being both aural and textual, and digital data corresponding to the correct spelling of each of said unique pictorial representations.

## Patentansprüche

1. Eine elektronische Videosystemanordnung für erzieherische Zwecke (20) für den Anschluß an einen Standard TV-Empfänger (30), um einem Kind Grundkenntnisse durch die Verwendung von bildlichen Wiedergaben mit Animation zu vermitteln, die dazu dienen, das besagte Kind zu motivieren, die besagte Anordnung zu benutzen und die Lernfähigkeit des besagten Kindes zu verbessern, besagte elektronische Videosystemanordnung für erzieherische Zwecke wird gekennzeichnet durch:
- Speichermittel (51) für die Speicherung digitaler Daten, die mehreren bildlichen Darstellungen entsprechen, digitale Daten, die den Abfragen entsprechen, die mit den besagten bildlichen Darstellungen, die das besagte Kind anweisen, eine vorgeschlagene richtige Antwort zu geben, verbunden sind, besagte Abfragen, die sowohl auditiv als auch textlich sind, und digitale Daten, die der richtigen Antwort auf besagte Abfragen entsprechen, die mit den besagten bildlichen Darstellungen verbunden sind;
- Mittel zur Bilderzeugung (52) (59), elektrisch verbunden mit dem besagten Speichermittel für die Kombination besagter Daten zu mehreren Kombinationen und digital erzeugende Videosignale, entsprechend der besagten mehreren bildlichen Darstellungen zum Zwecke der Erzeugung eines einzelnen Bildes, das die besagten bildlichen Darstellungen und textlichen Darstellungen beinhaltet;
- Schnittstellenmittel (61), elektrisch verbunden mit den besagten Mitteln zur Bilderzeugung für die Zurverfügungstellung des besagten Videosignals an besagten TV-Empfänger zum Zwecke der Wiedergabe der besagten bildlichen Darstellungen und der damit verbundenen Abfragen;
- Prozessormittel (50), elektrisch verbunden mit dem besagten Speichermittel und den besagten Mitteln zur Bilderzeugung;
- besagtes Prozessormittel für die Auswahl einer der besagten bildlichen Darstellungen, die in dem besagten Speichermittel (51) abgespeichert sind und die veranlassen, daß die besagte ausgewählte bildliche Darstellung auf dem besagten TV-Empfänger (33) gezeigt wird, und die veranlassen, daß die damit verbundene Abfrage dem besagten Kind präsentiert wird;
- mehrere auswechselbare Eingabemittel (32), (200), (300), die es dem besagten Kind erlauben, eine vorgeschlagene richtige Antwort auf die besagte Abfrage zu geben;
- Mittel (50, 51, 53, 58), um die vorgeschlagene richtige Antwort des besagten Kindes mit der besagten richtigen Antwort, die in dem besagten Speichermittel abgespeichert ist, zu vergleichen; und
- ein Mittel zur Animation der besagten gezeigten bildlichen Darstellung, die mit der besagten Abfrage nach den vorgeschlagenen richtigen Antworten verbunden ist und die dem besagten Kind präsentiert wird, um dem besagten Kind einen Hinweis auf die Richtigkeit der vorgeschlagenen Antwort des besagten Kindes zu geben.

2. Die Erfindung gemäß Anspruch 1, in dem das besagte Speichermittel (300) aus integrierten Schaltungsbausteinen mit Festwertspeicher besteht.

3. Die Erfindung gemäß Anspruch 1, in dem besagtes Eingabemittel (32) aus einer alphanumerischen Tastatur besteht.

4. Die Erfindung gemäß Anspruch 1, in dem besagtes Eingabemittel (300) aus einer berührungsempfindlichen Eingabeunterlage besteht.

5. Die Erfindung gemäß Anspruch 1, in dem besagtes Eingabemittel (200) aus einer Mausanordnung zur Kontrolle des Cursors besteht.

6. Die elektronische Videosystemanordnung für erzieherische Zwecke (20) gemäß Anspruch 1, in dem sich das besagte Speichermittel (51), besagte Mittel zur Erzeugung eines Bildes (52), (59), das besagte Schnittstellenmittel (61), das besagte Prozessormittel (50), Mittel zum Vergleichen und Mittel zum Zeigen der Richtigkeit der besagten vorgeschlagenen richtigen Antwort in einem Grundgehäusemittel (23) befinden und worin besagte Eingabemittel (32), (300), (200) in einem Zweitgehäusemittel (22), (201), (301) untergebracht sind.

7. Die Erfindung gemäß Anspruch 6, in dem das besagte Zweitgehäusemittel (22) teleskopisch und abnehmbar ist, und vom Grundgehäusemittel (23) zum Zwecke der Aufbewahrung des besagten Zweitgehäusemittels aufgenommen wird.

8. Die in Anspruch 1 gekennzeichnete Erfindung, bei dem besagte Eingabemittel (32), (300), (200) mit dem besagten Prozessormittel (50) durch Infrarotlichtwellensignale (37) kommunizieren, und damit den besagten Eingabemitteln Fernbedienung von und in drahtloser Kommunikation mit dem besagten Prozessormittel (50) zu erlauben.

9. Die elektronische Videosystemanordnung für erzieherische Zwecke (20) gemäß Anspruch 1 beinhaltet des weiteren Festwertspeicherkassetten (31), die elektrisch und lösbar mit dem besagten Prozessormittel (50) verbunden sind, was es der besagten Anordnung (20) ermöglicht, zusätzliche bildliche Darstellungen zu präsentieren, mit denen richtige Antworten assoziiert werden (können).

10. Die elektronische Videosystemanordnung für erzieherische Zwecke (20) gemäß Anspruch 1 beinhaltet des weiteren tonerzeugende Mittel (54), die elektrisch und lösbar mit dem besagten Prozessormittel (50) und dem besagten Schnittstellenmittel (61) verbunden sind, um dem besagten Kind Tonausgangssignale als einen Hinweis auf die Richtigkeit der vorgeschlagenen Antwort des besagten Kindes zu geben.

11. Die elektronische Videosystemanordnung für erzieherische Zwecke (20) gemäß Anspruch 1 beinhaltet des weiteren Sprachsynthesemittel (56), die elektrisch und lösbar verbunden sind mit dem besagten Prozessormittel (50) und dem besagten Schnittstellenmittel (61) für die besagten Abfragen in synthetischer menschlicher Sprache an besagtes Kind nach den vorgeschlagenen richtigen Antworten, die mit besagten bildlichen Darstellungen verbunden sind und die dazu dienen, besagten Hinweis auf die Richtigkeit der vorgeschlagenen Antwort des besagten Kindes in synthetischer menschlicher Sprache zu geben.

12. Die elektronische Videosystemanordnung für erzieherische Zwecke (20) gemäß Anspruch 1 beinhaltet des weiteren Mittel, um besagtem Kind Lösungshilfen zu geben, um dem Kind dabei zu helfen, die richtige Antwort auf besagte präsentierte Abfrage zu bestimmen.

13. Eine elektronische Videosystemanordnung für erzieherische Zwecke (20) gemäß Anspruch 1, um einem Kind Rechtschreibkenntnisse zu vermitteln, gekennzeichnet dadurch, daß die digitalen Daten, die in dem Speichermittel abgespeichert sind, digitale Daten enthalten, die in mehreren Kombinationsmöglichkeiten, die mehreren einzigartigen bildlichen Darstellungen von allgemeinen Objekten entsprechen, kombiniert werden können, und digitale Daten, die den Anfragen entsprechen, die mit jeder einzelnen der besagten einzigartigen bildlichen Darstellungen verbunden sind und besagtes Kind anleiten, die richtige Rechtschreibung der besagten einzigartigen bildlichen Darstellungen zu bestimmen, die Abfragen sind sowohl auditiv als auch textlich, und digitale Daten, die der richtigen Rechtschreibung von jeder der besagten einzigartigen bildlichen Darstellungen entsprechen.

## Revendications

1. Un appareil électronique à but éducatif à système vidéo (20) destiné à être connecté sur un téléviseur standard (30) pour enseigner des compétences de base à un enfant par le biais d' affichages en images animés servant à motiver ledit enfant à utiliser ledit appareil et à promouvoir l' apprentissage de l' enfant, ledit appareil électronique à but éducatif à système vidéo étant caractérisé par:
- un moyen de mémoire (51) pour sauvegarder des données numériques correspondant à une pluralité de représentations en images, des données numériques correspondant à des questions associées auxdites représentations indiquant audit enfant de fournir une réponse proposée comme étant correcte, lesdites questions étant à la fois audibles et textuelles, et des données numériques correspondant à la réponse correcte auxdites questions associées auxdites représentations en images;
- un moyen pour générer un affichage (52) (59) connecté par voie électrique auxdits moyens de mémoire, afin de combiner lesdites données en ladite pluralité de combinaisons et de générer, par voie numérique, des signaux vidéo représentatifs de ladite pluralité de représentations en images dans le but de générer un seul affichage incorporant lesdites représentations en images et lesdites représentations textuelles;
- un moyen d' interface (61) connecté par voie électrique auxdites moyens de génération d' affichage afin de fournir ledit signal vidéo audit téléviseur dans le but d' y afficher lesdites représentations en images et lesdites questions qui y sont associées;
- un moyen de traitement (50) connecté par voie électrique auxdits moyens de mémoire et auxdits moyens de génération d' affichage;
- ledit moyen de traitement servant à la sélection d' une des représentations en images sauvegardées dans les moyens de mémoire (51) et provoquant l' affichage sur le téléviseur (33) de ladite représentation en images sélectionnée et provoquant la présentation de ladite question associée à l' enfant;
- une pluralité de moyens d' entrée de données interchangeables (32) (200) (300) afin de permettre à l' enfant de fournir une réponse proposée comme étant correcte à ladite demande;
- des moyens (50), (51), (53), (58) pour comparer la réponse proposée comme étant correcte par l' enfant à ladite réponse correcte sauvegardée dans lesdits moyens de mémoire; et
- un moyen d' animation de ladite représentation en images affichée et associée à ladite demande pour les réponses proposées comme étant correctes et présentées à l' enfant afin de fournir à celui-ci une indication de la validité de la réponse que celui-ci a proposée.

2. L' invention selon la revendication 1 dans laquelle ledit moyen de mémoire (300) inclut des dispositifs de circuits intégrés à mémoire morte.

3. L' invention selon la revendication 1 dans laquelle ledit moyen d' entrée de données (32) inclut un clavier alphanumérique.

4. L' invention selon la revendication 1 dans laquelle ledit moyen d' entrée de données (300) inclut un bloc d' entrée tactile.

5. L' invention selon la revendication 1 dans laquelle le moyen d' entrée (200) inclut un dispositif de contrôle du curseur par souris.

6. L'appareil électronique à but éducatif à système vidéo (20) selon la revendication 1 dans laquelle ledit moyen de mémoire (51), ledit moyen de génération d'affichage (52), (59), ledit moyen d'interface (61), ledit moyen de traitement (50), les moyens de comparaison et les moyens pour indiquer la validité de ladite réponse proposée comme étant correcte sont contenus dans un premier moyen de rangement (23) et dans lequel ledit moyen (32), (300), (200) est contenu dans un deuxième moyen de rangement (22), (201), (301).

7. L'invention selon la revendication 6 dans laquelle ledit deuxième moyen de rangement (22) est reçu de manière télescopique et amovible par le premier moyen de rangement (23) afin de permettre l'entreposage du deuxième moyen de rangement.

8. L'invention selon la revendication 1 dans laquelle ledit moyen d'entrée de données (32), (300), (200) communique avec ledit moyen de traitement (50) par le biais de signaux d'onde lumineuse infrarouge (37), permettant ainsi que lesdits moyens d'entrée de données soient en communication et sans fil avec ledit moyen de traitement (50).

9. L' appareil électronique à but éducatif à système vidéo (20) selon la revendication 1 comprenant de plus, des cartouches à mémoire morte (31) connectées par voie électriques audit moyen de traitement (50) et amovibles par rapport à ce dernier, permettant audit appareil (20) d' afficher des représentations en images supplémentaires avec les réponses correctes qui y sont associées.

10. L' appareil électronique à but éducatif à système vidéo (20) selon la revendication 1 comprenant de plus, un moyen de générer des sons (54), connecté par voie électrique audit moyen de traitement (50) et audit moyen d' interface (61) afin de fournir des signaux de sortie audio pour indiquer à l' enfant la validité de la réponse qu' il a proposée.

11. L' appareil électronique à but éducatif à système vidéo (20) selon la revendication 1 comprenant de plus, un moyen de synthèse de la voix (56), connectée par voie opérationnelle et électrique audit moyen de traitement (50) et audit moyen d' interface (61) afin de fournir à l' enfant, en voix humaine synthétisée, lesdites questions pour les réponses proposées comme étant correctes associées auxdites représentations en images et afin de fournir ladite indication quant à la validité de la réponse proposée comme étant correcte par l'enfant en voix humaine synthétisée.

12. L' appareil électronique à but éducatif à système vidéo (20) selon la revendication 1 comprenant de plus, un moyen pour présenter audit enfant des indices aidant l' enfant à déterminer la réponse correcte à ladite question présentée.

13. Un appareil électronique à but éducatif à système vidéo (20) selon la revendication 1, servant à enseigner l'orthographe à l' enfant, caractérisé par le fait que: les données numériques sauvegardées dans le moyen de mémoire comprennent des données numériques pouvant être combinées dans une pluralité de combinaisons correspondant à une pluralité de représentations uniques en images d' objets ordinaires, et des données numériques correspondant aux questions associées à chacune des représentations uniques en images demandant à l' enfant de fournir la bonne orthographe desdites représentations en images uniques, les questions étant à la fois audibles et textuelles, et des données numériques correspondant à la bonne orthographe de chacune des représentations uniques en images.
